# EUROPÄISCHE PATENTSCHRIFT

(11) **EP 3 915 754 B1**
(45) Veröffentlichungstag und Bekanntmachung des Hinweises auf die Patenterteilung: **19.04.2023**
(21) Anmeldenummer: 20176446.1
(22) Anmeldetag: 26.05.2020
(51) Int. Cl.: B29C 45/73, B29C 45/76, B29C 35/00

(54) **VORRICHTUNG UND VERFAHREN ZUR VARIOTHERMEN TEMPERIERUNG EINES SPRITZGIESSWERKZEUGS**
METHOD AND DEVICE FOR VARIOTHERMAL TEMPERING OF AN INJECTION MOULDING TOOL
DISPOSITIF ET PROCÉDÉ DE MISE EN TEMPÉRATURE VARIOTHERMIQUE D'UN OUTIL DE MOULAGE PAR INJECTION

(43) Veröffentlichungstag der Anmeldung: 01.12.2021
(73) Patentinhaber: Wenz Kunststoff GmbH & Co. KG, 58511 Lüdenscheid (DE)
(72) Erfinder: Weller, Karsten, 58509 Lüdenscheid (DE)
(74) Vertreter: Patentanwälte Dörner & Kötter PartG mbB

(56) Entgegenhaltungen:
- EP-A1- 3 059 062
- DE-A1-102008 045 006
- DE-U1-202012 104 680

## Beschreibung

Die Erfindung betrifft eine Vorrichtung zur variothermen Temperierung eines Spritzgießwerkzeugs nach dem Oberbegriff des Patentanspruchs 1. Die Erfindung betrifft weiterhin ein Verfahren zur variothermen Temperierung eines Spritzgießwerkzeugs nach dem Oberbegriff des Patentanspruchs 8.

Bei der variothermen Temperierung wird die Werkzeugwand des Spritzgießwerkzeugs vor dem Einspritzvorgang auf eine Temperatur oberhalb der Glasübergangstemperatur des Kunststoffs erwärmt. Erst nach der Füllung der Kavität erfolgt eine Werkzeugkühlung, bis das Formteil die notwendige Entformungstemperatur erreicht hat. Hierzu werden in dem Spritzgießwerkzeug integrierte Kühlkanäle wechselweise warm und kalt durchströmt. Das Aufheizen der Werkzeugwand auf ein hohes Temperaturniveau erfolgt durch ein drucküberlagertes Heißwassertemperiergerät mit Vorlauftemperaturen von bis zu 180° Celsius und mehr. Das heiße Wasser wird bei Drücken von bis zu 8 bar durch die Kanäle des Spritzgießwerkzeugs gepumpt, bis die gewünschte Werkzeugtemperatur erzielt ist. Nach dem Einspritzen des Kunststoffs in die Kavität des Spritzgießwerkzeugs erfolgt das Abkühlen der Werkzeugwand über ein zweites Temperiergerät mit niedriger Vorlauftemperatur. Bei der Kombination der beiden Kreisläufe (Heizen/ Kühlen) ist es unbedingt erforderlich, den Wasserdruck über den gesamten Prozess konstant zu halten, um eine Expansion des Kühlmediums zu vermeiden. Nachteilig an der vorbekannten Vorrichtung ist, dass diese durch den Einsatz von zwei Temperiergeräten sehr aufwendig ist. Die Kühlung des Kühlmediums erfolgt hier über einen Wärmetauscher, der die Abwärme über ein weiteres Kühlmedium abführt, das nicht Bestandteil des Kühlkreislaufs ist. Darüber hinaus ist die Zykluszeit des Werkzeugs mit einer solchen Vorrichtung nach wie vor sehr hoch.

Zur Reduzierung des Aufwandes und zur Minimierung der Zykluszeit wird in der EP 2737992 A1 eine Vorrichtung vorgeschlagen, bei welcher der Kühlkreislauf direkt mit einem Kaltwassernetz verbunden ist, wodurch das Wasser des Wassernetzes direkt als Kühlmedium in den Kühlkreislauf eingespeist wird (Direktkühlung). In dieser Vorrichtung, die sich in der Praxis bewährt hat, ist nunmehr lediglich ein in dem Heizkreislauf angeordnetes Temperiergerät erforderlich. Dieses Temperiergerät dient zum einen der Temperaturregelung und zum anderen der Druckregelung des Wassers im Heizkreislauf. Aufgrund der näherungsweisen Inkompressibilität des Kühlmittels Wasser resultiert aus jeder Temperaturänderung in dem Heizkreislauf eine Druckänderung, die jeweils von dem Temperiergerät durch Zufuhr oder Abfuhr von Wasser auszuregeln ist. Aufgrund der hierdurch bedingten sehr hohen Schaltzahl sind an die Ventile des Temperiergerätes hohe Anforderungen gestellt. Temperiergeräte sind daher aufwendig herzustellen und bedürfen zudem regelmäßiger Wartung.

Hier will die Erfindung Abhilfe schaffen. Der Erfindung liegt die Aufgabe zu Grunde, eine Vorrichtung zur variothermen Temperierung eines Spritzgießwerkzeugs zu schaffen, welche aufwandminimiert herstellbar ist und deren Wartungsanforderungen reduziert sind. Gemäß der Erfindung wird diese Aufgabe durch die Merkmale des kennzeichnenden Teils des Patentanspruchs 1 gelöst.

Mit der Erfindung ist eine Vorrichtung zur variothermen Temperierung eines Spritzgießwerkzeugs geschaffen, welche aufwandminimiert herstellbar ist und deren Wartungsanforderungen reduziert sind. Dadurch dass die Mittel zur kontinuierlichen Druckregelung des Heizkreislaufs eine Druckpumpe umfassen, die über Druckauslgleichsleitungen mit dem Heizkreislauf sowie auch dem Kühlkreislauf verbunden ist, ist ein sich über den Heizkreislauf und den Kühlkreislauf erstreckendes Drucksystem gebildet. Sich aufgrund von Temperaturschwankungen im Heizkreislauf ergebene Druckschwankungen werden über die Druckausgleichsleitungen kontinuierlich ausgeglichen. Es ist somit kein komplexes Temperiergerät mehr erforderlich. Zur Temperaturregelung des Heizkreislaufs genügt ein einfaches Heizmodul.

Erfindungswesentlich ist, dass der Heizkreislauf über eine Druckausgleichsleitung mit einem weiteren über eine Druckpumpe auf einen vorgegebenen Betriebsdruck geregelten Kreislauf verbunden ist. Der Heizkreislauf ist ansonsten geschlossen ausgeführt. Druckschwankungen im Heizkreislauf, die sich durch Temperaturänderungen des gemeinsamen Temperiermediums, vorzugsweise Wasser ergeben, werden so kontinuierlich ausgeglichen. Vorliegend ist zwischen der Druckpumpe, die den erforderlichen Druck von 10 bar und mehr erzeugt und der in jedem Kreislauf angeordneten Umwälzpumpe zu unterscheiden. Die Umwälzpumpe dient nicht einem Druckaufbau oder einer Druckregelung, sondern nur dem Umwälzen des Wassers innerhalb des jeweiligen Kreislaufs.

In Weiterbildung der Erfindung ist die Druckpumpe zur Erzeugung des erforderlichen Betriebsdrucks in dem Kühlkreislauf angeordnet, wobei der Heizkreislauf über eine Druckausgleichsleitung direkt mit dem Kühlkreislauf verbunden ist. Hierdurch ist der Betriebsdruck des Heizkreislauf unmittelbar gleich dem Betriebsdruck des Kühlkreislaufs, ohne dass es einer separaten Druckregelung des Heizkreislaufs bedarf. Hierbei übernimmt die Druckpumpe zugleich die Aufgabe einer Umwälzpumpe.

In Ausgestaltung der Erfindung ist der Kühlkreislauf offen ausgebildet, wobei in der Rücklaufleitung in Fließrichtung hinter der Druckausgleichsleitung ein Drosselventil oder ein Überströmventil angeordnet ist. Dabei ist der Zulauf des Kühlkreislaufs bevorzugt direkt mit dem Wassernetz verbunden, wodurch eine effiziente Direktkühlung erzielt ist. Durch das Drosselventil bzw. das Überströmventil ist die Erzeugung des gewünschten Betriebsdrucks über die Druckpumpe gewährleistet.

In alternativer Ausgestaltung der Erfindung ist ein zusätzlicher Speisekreislauf angeordnet, der mit einer Fluidquelle verbunden ist und in dem die Druckpumpe angeordnet ist, wobei der Speisekreislauf über eine Druckausgleichsleitung direkt mit dem Kühlkreislauf verbunden ist. Hierdurch ist ein geschlossener Heizkreislauf sowie ein geschlossener Kühlkreislauf ermöglicht, welche beiden Kreisläufe über Druckausgleichsleitungen mit dem in dem Speisekreislauf durch die Druckpumpe erzielten Betriebsdruck synchronisiert sind. Hierbei kann der Speisekreislauf direkt oder über den Kühlkreislauf mit dem Heizkreislauf verbunden sein, wobei eine direkte Kopplung des Heizkreislaufs mit dem Speisekreislauf zu bevorzugen ist.

In Weiterbildung der Erfindung ist in dem Kühlkreislauf ein Wärmetauscher angeordnet, durch den der Speisekreislauf geführt ist. Hierdurch ist eine kontinuierliche Wärmeabfuhr aus dem Kühlkreislauf erzielt. Zur Wärmeabfuhr aus dem Speisekreislauf kann in diesem zusätzlich noch ein weiterer Wärmetauscher angeordnet sein.

In Ausgestaltung der Erfindung ist in dem Heizkreislauf in Fließrichtung vor der Druckausgleichsleitung ein Entlüftungsventil angeordnet. Hierdurch ist eine Entlüftung der Leitung zu deren Befüllung mit einem Temperierfluid, insbesondere mit Wasser ermöglicht. Bevorzugt ist bei einer geschlossenen Gestaltung eines mit einem Speisekreislauf über eine Druckausgleichsleitung verbundenen Kühlkreislaufs auch in dem Kühlkreislauf in Fließrichtung vor der Druckausgleichsleitung ein Entlüftungsventil angeordnet.

In weiterer Ausgestaltung der Erfindung ist der Heizkreislauf mit einem Pufferspeicher verbunden, der mit dem Heizkreislauf einerseits und dem Kühlkreislauf andererseits verbunden ist. Hierdurch ist eine Zwischenspeicherung von durch das Spritzgießwerkzeug erwärmten Kühlwasser für eine nachfolgende Heizphase ermöglicht. Bevorzug ist der Pufferspeicher in Form eines Schlauchpakets ausgebildet.

In weiterer Ausgestaltung der Erfindung weist der Kühlkreislauf und/oder der Heizkreislauf eine Ventilanordnung auf, über die eine Abkopplung des jeweiligen Kreislaufs von dem Spritzgießwerkzeug unter Verbindung von Vorlauf und Rücklauf ermöglicht ist. Hierdurch ist eine bedarfsgerechte Einkopplung des Spritzgießwerkzeugs in den Kühlkreislauf oder in den Heizkreislauf ermöglicht.

Der Erfindung liegt weiterhin die Aufgabe zu Grunde, ein Verfahren zur variothermen Temperierung eines Spritzgießwerkzeugs zu schaffen, das aufwandminimiert und effizient durchführbar ist. Gemäß der Erfindung wird diese Aufgabe durch die Merkmale des kennzeichnenden Teils des Patentanspruchs 8 gelöst.

Mit der Erfindung ist ein Verfahren zur variothermen Temperierung eines Spritzgießwerkzeugs geschaffen, dass aufwandminimiert und effizient durchführbar ist. Dadurch, dass der Heizkreislauf zu dessen Druckregelung direkt mit dem Kühlkreislauf oder einem den Druck des Kühlkreislauf erzeugenden Speisekreislauf verbunden wird, ist eine einfache, kontinuierliche Druckregelung des Heizkreislaufs ohne das Erfordernis eines Temperiergerätes ermöglicht.

In Weiterbildung der Erfindung wird ein zusätzlicher Speisekreislauf angeordnet, in dem die Druckpumpe angeordnet ist, wobei der Kühlkreislauf sowie auch der Heizkreislauf zu deren Druckregelung jeweils direkt mit dem Speisekreislauf verbunden werden.

In Weiterbildung der Erfindung wird ein Schlauchpaket mit dem Heizkreislauf einerseits und dem Kühlkreislauf andererseits verbunden, wobei bei Einkopplung des Spritzgießwerkzeugs in den Kühlkreislauf zunächst der Rücklauf des Heizkreislaufs geöffnet wird und nach gewünschter Füllung des Schlauchpakets der Rücklauf des Heizkreislaufs geschlossen wird. Hierdurch ist eine Nutzung der von dem Kühlwasser aufgenommenen Wärme des Spritzgießwerkzeugs für einen nachfolgenden Heizvorgang ermöglicht. Bevorzugt wird das Rücklaufventil des Heizkreislaufs zeitgesteuert betätigt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Fig. 1: die schematische Darstellung einer Vorrichtung zur variothermen Temperierung eines Spritzgießwerkzeugs;
- Fig. 2: die schematische Darstellung einer Vorrichtung zur variothermen Temperierung eines Spritzgießwerkzeugs in einer weiteren Ausführungsform und
- Fig. 3: die die schematische Darstellung einer Vorrichtung zur variothermen Temperierung eines Spritzgießwerkzeugs in einer dritten Ausführungsform.

Die als Ausführungsbeispiel gewählte Vorrichtung umfasst im Wesentlichen einen Heizkreislauf 1 sowie einen mit diesem verbundenen Kühlkreislauf 2, welche durch ein Spritzgießwerkzeug 3 geführt sind. Das Spritzgießwerkzeug 3 ist in den Figuren nur schematisch dargestellt, die den Vorlauf 31 und den Rücklauf 32 verbindenden, innerhalb des Spritzgießwerkzeugs 3 geführten Heiz- bzw. Kühlkanäle sind nicht gezeigt.

Der Heizkreislauf 1 ist geschlossen ausgebildet und umfasst in einen mit dem Vorlauf 31 des Spritzgießwerkzeugs 3 verbundenen Vorlauf 11 und einen mit dem Rücklaulauf 32 des Spritzgießwerkzeugs 3 verbundenen Rücklauf 12, die endseitig miteinander verbunden sind. In dem Vorlauf 11 sind eine Umwälzpumpe 13 und ein Heizmodul 14 angeordnet, zwischen denen ein Wärmepufferblock 15 positioniert ist. Der Wärmepufferblock 15 dient der Vorwärmung des Wassers, um Temperaturschläge bei Auftreffen auf des Heizmodul 14 zu vermeiden. In Fließrichtung vor der Umwälzpumpe ist in dem Heizkreislauf 1 ein Entlüftungsventil 17 angeordnet, das über eine Entlüftungsleitung 171 mit dem Rücklauf 22 des Kühlkreislaufs 2 verbunden ist. Das Entlüftungsventil 17 dient der Entlüftung bei der Befüllung des Heizkreislaufs 1 mit Wasser. Die durch das Wasser herausgepresste Luft wird über den Rücklauf 22 des Kühlkreislaufs 2 durch den Ablauf 42 des Wassernetzes 4 abgeführt.

Vor dem Spritzgießwerkzeug 3 ist eine Ventilanordnung 16 angeordnet, die ein in dem Vorlauf angeordnetes Vorlaufventil 161, ein in dem Rücklauf angeordnetes Rücklaufventil 162 sowie ein Vorlauf 11 und Rücklauf 12 verbindendes Verbindungsventil 163 umfasst. Über die Ventilanordnung 16, die auch als Mehrwegeventil ausgebildet sein kann, ist eine Ein- bzw. Auskopplung des Spritzgießwerkzeugs 3 aus dem Heizkreislauf 1 ermöglicht.

Der Kühlkreislauf 2 ist direkt mit dem Zulauf 41 und dem Ablauf 42 eines Wassernetzes verbunden. Im Zulauf 21 des Kühlkreislaufs 2 ist eine Druckpumpe 23 angeordnet, welche zusammen mit dem im Rücklauf 22 des Kühlkreislaufs 2 angeordneten Überströmventil 24 den erforderlichen Betriebsdruck gewährleistet. Alternativ kann an Stelle des Überstromventils auch ein Drosselventil angeordnet sein. Das Überströmventil 24 umgehend ist eine Bypassleitung 25 in dem Rücklauf 22 des Kühlkreislaufs 2 angeordnet, die ein Absperrventil 251 aufweist. Der Druckpumpe 23 sowie der Bypassleitung 25 nachgeschaltet sind Zulauf 21 und Rücklauf 22 des Kühlkreislaufs 2 über eine Ventilanordnung 26 miteinander verbunden, die ein in dem Vorlauf angeordnetes Vorlaufventil 261, ein in dem Rücklauf angeordnetes Rücklaufventil 262 sowie ein Vorlauf 21 und Rücklauf 22 verbindendes Verbindungsventil 263 umfasst. Die Ventilanordnung 26 kann auch als Mehrwegeventil ausgebildet sein.

Für den Fall, dass - aus welchen Gründen auch immer - eine Bypassleitung vermieden werden soll, kann die Bypassfunktionalität - wenn auch mit signifikant schlechtem Wirkungsgrad - auch dadurch erzielt werden, dass das Überstromventil durch ein Magnetventil ersetzt wird. Diese Lösung ist jedoch nicht zu bevorzugen.

Zwischen der Druckpumpe 23 und der Ventilanordnung 26 zweigt eine Druckausgleichsleitung 5 von dem Zulauf 21 des Kühlkreislaufs 2 ab, die zwischen dem Entlüftungsventil 17 und der Umwälzpumpe 13 mit dem Vorlauf 11 des Heizkreislaufs 1 verbunden ist. Weiterhin ist ein Schlauchpaket 6 angeordnet, das mit einem Ende in Fließrichtung hinter dem Entlüftungsventil 17 mit dem Heizkreislauf 1 und mit dem anderen Ende zwischen der Bypassleitung 25 und der Entlüftungsleitung 171 mit dem Rücklauf 22 des Kühlkreislaufs 2 verbunden ist.

Zur Kühlung des Spritzgießwerkzeugs 3 werden das Vorlaufventil 261 und das Rücklaufventil 262 der Ventilanordnung 26 geöffnet und das Verbindungsventil 263 geschlossen. Zugleich werden das Vorlaufventil 161, das Rücklaufventil 162 sowie das Verbindungsventil 163 der Ventilanordnung 16 des Heizkreislaufs geschlossen. Durch die Druckpumpe 23 wird das über den Zulauf 41 des Wassernetzes 4 einströmende Kaltwasser durch das Spritzgießwerkzeug 3 gefördert, wobei ein Betriebsdruck erzeugt wird, der im Ausführungsbeispiel 10 bar beträgt. Nachfolgend wird das Rücklaufventil 162 des Heizkreislaufs 1 geöffnet, wodurch das über das Spritzgießwerkzeug 3 erhitzte Wasser durch den Rücklauf 12 des Heizkreislaufs 1 in das Schlauchpaket 6 gefördert wird. Nach einer definierten Zeitspanne wird das Rücklaufventil 162 wieder geschlossen. Das Schlauchpaket ist nun mit erhitztem Kühlwasser gefüllt. Nach Beendigung der Kühlsequenz werden das Vorlaufventil 261 und das Rücklaufventil 262 geschlossen und das Verbindungsventil 263 des Kühlkreislaufs 2 wird geöffnet. Aufgrund des kontinuierlich bestehenden Betriebsdrucks kann das Wasser aus dem Schlauchpaket nicht in den Kühlkreislauf gelangen.

Zum Aufheizen des Spritzgießwerkzeugs 3 wird das Verbindungsventil 163 geschlossen und das Zulaufventil 161 sowie das Rücklaufventil 162 werden geöffnet. Das Spritzgießwerkzeug 3 wird über den Heizkreislauf 1 gefüllt, wobei das in dem Schlauchpaket 6 gespeicherte heiße Wasser in den Vorlauf 11 des Heizkreislaufs gelangt. Das Wasser in dem Heizkreislauf 1 wird durch die Umwälzpumpe 13 durch das Spritzgießwerkzeug 3 gefördert, wobei über die Druckausgleichsleitung 5 auch in dem Heizkreislauf 1 der Betriebsdruck von 10 bar anliegt. Dabei wird das über den Wärmepufferblock 15 vorgewärmte Wasser durch das Heizmodul 14 gefördert, wo es aufgeheizt wird. Hierdurch ist ein Druckanstieg innerhalb des Heizkreislaufs 1 bewirkt, der über die Druckausgleichsleitung 5 unmittelbar ausgeglichen wird. Während des Durchströmens des Wassers durch das Spritzgießwerkzeug 3 wird Wärme an dieses abgegeben, wodurch das Wasser abgekühlt wird, wodurch der Druck innerhalb des Heizkreislaufs 1 sinkt. Auch hier wird der Druckabfall über die Druckausgleichsleitung 5 unmittelbar ausgeglichen. Die durch die Druckschwankungen über die Druckausgleichsleitung 5 geförderten Wassermengen sind dabei sehr gering.

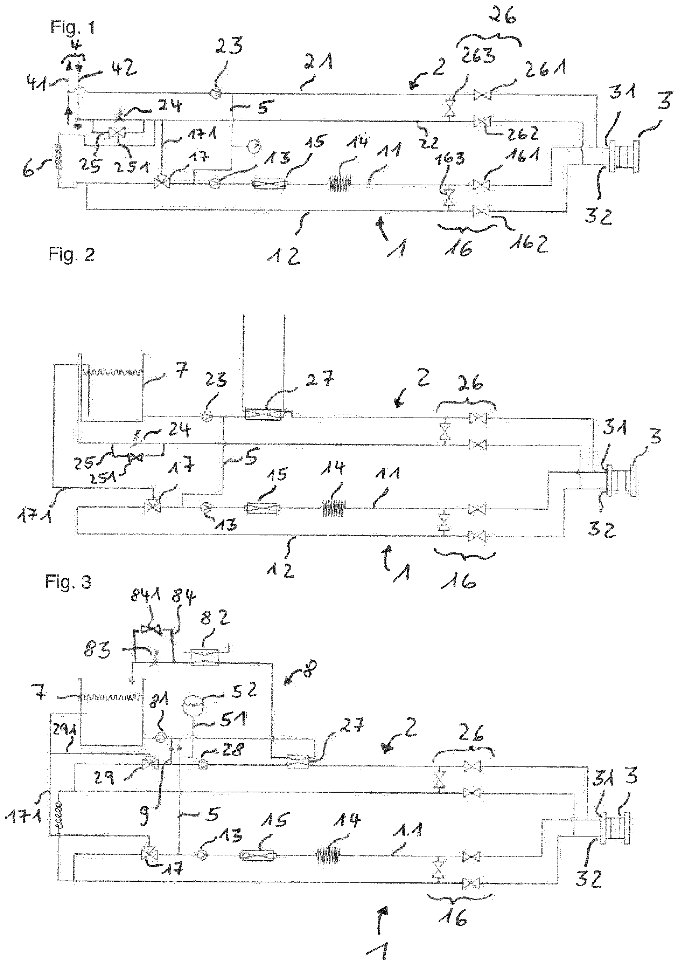

In Figur 2 ist eine modifizierte Vorrichtung dargestellt, bei welcher der Kühlkreislauf 2 von einem Wasserbehälter 7 gespeist ist und dessen Heizkreislauf nicht mit einem Schlauchpaket verbunden ist. Im Zulauf 21 des Kühlkreislaufs 2 ist wiederum eine Druckpumpe 23 angeordnet, welche zusammen mit einem im Rücklauf 22 des Kühlkreislaufs 2 angeordneten Überstromventil 24 den erforderlichen Betriebsdruck gewährleistet. Das Überstromventil 24 umgehend ist eine Bypassleitung 25 in dem Rücklauf 22 des Kühlkreislaufs 2 angeordnet, die ein Absperrventil 251 aufweist.

Zur Kühlung des in diesem Ausführungsbeispiel im Kreislauf geführten Wassers ist in dem Vorlauf 21 des Kühlkreislaufs 2 ein Wärmetauscher 27 angeordnet. Die mit dem Entlüftungsventil 17 verbundene Entlüftungsleitung 171 ist gemeinsam mit dem Rücklauf 22 des Kühlkreislaufs 2 in den Wasserbehälter 7 geführt.

Im Ausführungsbeispiel gemäß Figur 3 sind sowohl der Heizkreislauf 1, als auch der Kühlkreislauf 2 geschlossen ausgeführt. Es ist ein zusätzlicher Speisekreislauf 8 angeordnet, der von einem Wasserbehälter 7 gespeist ist und der durch einen in dem Kühlkreislauf 2 angeordneten Wärmetauscher 27 im Gegenstromverfahren geführt ist. Zur Kühlung des Speisekreislaufs 8 ist in diesem dem Wärmetauscher 27 nachgeschaltet ein zweiter Wärmetauscher 82 angeordnet. Zwischen dem Wasserbehälter 7 und dem Wärmetauscher 27 ist in dem Speisekreislauf 8 eine Druckpumpe 81 angeordnet, welche zusammen mit einem in Fließrichtung hinter dem zweiten Wärmetauscher 82 angeordneten Überstromventil 83 den erforderlichen Betriebsdruck gewährleistet, der im Ausführungsbeispiel 10 bar beträgt. Alternativ kann an Stelle des Überstromventils auch ein Drosselventil angeordnet sein. Das Überstromventil 83 umgebend ist eine Bypassleitung 84 in dem Speisekreislauf 8 angeordnet, die ein Absperrventil 841 aufweist.

Der Heizkreislauf 1 ist im Wesentlichen entsprechend der Vorrichtung gemäß Figur 1 ausgebildet, wobei das Schlauchpaket 6 wiederum mit einem Ende in Fließrichtung hinter dem Entlüftungsventil 17 mit dem Heizkreislauf 1 und mit dem anderen Ende mit dem Rücklauf 22 des nun geschlossen ausgeführten Kühlkreislaufs 2 verbunden ist. Von dem Vorlauf 11 des Heizkreislaufs 1 ist zwischen dem Entlüftungsventil 17 und der Umwälzpumpe 13 eine Druckausgleichsleitung 5 abgezweigt, die zwischen der Druckpumpe 81 und dem Wärmetauscher 27 mit dem Speisekreislauf 8 verbunden ist. Die Druckausgleichsleitung 5 ist über eine Anschlussleitung 51 mit einem Ausdehnungsgefäß 52 verbunden.

Der geschlossen ausgeführte Kühlkreislauf 2 weist in diesem Ausführungsbeispiel lediglich eine Umwälzpumpe 28 auf und ist über eine zweite Druckausgleichsleitung 9 ebenfalls zwischen der Druckpumpe 81 und dem Wärmetauscher 27 mit dem Speisekreislauf 8 verbunden. Über die Druckausgleichsleitungen 5, 9 ist der Druck in dem Heizkreislauf 1 sowie in dem Kühlkreislauf 2 mit dem Betriebsdruck des Speisekreislaufs 8 synchronisiert. Zur Entlüftung des geschlossenen Kühlkreislaufs 2 ist in Fließrichtung vor der Druckausgleichsleitung 9 ein Entlüftungsventil 29 angeordnet, das mit einer Entlüftungsleitung 291 gemeinsam mit der Entlüftungsleitung 171 des Entlüftungsventils 17 des Heizkreislaufs 1 in den Wasserbehälter 7 geführt ist.

## Patentansprüche

1. Vorrichtung zur variothermen Temperierung eines Spritzgießwerkzeugs (3), umfassend einen Heizkreislauf (1), in dem ein Heizmodul (14) angeordnet ist und einen Kühlkreislauf (2), der mit einer Fluidquelle verbunden ist, wobei der Heizkreislauf (1) und der Kühlkreislauf (2) durch das Spritzgießwerkzeug (3) geführt sind und wobei Mittel zur kontinuierlichen Druckregelung des Heizkreislaufs (1) angeordnet sind, **dadurch gekennzeichnet, dass** die Mittel zur kontinuierlichen Druckregelung des Heizkreislaufs (1) eine Druckpumpe (23, 81) zur Erzeugung des erforderlichen Betriebsdrucks umfassen, die über Druckausgleichsleitungen (5, 9) direkt mit dem Heizkreislauf (1) und dem Kühlkreislauf (2) verbunden ist.

2. Vorrichtung nach Anspruch 1, **dadurch gekennzeichnet, dass** die Druckpumpe (23) zur Erzeugung des erforderlichen Betriebsdrucks in dem Kühlkreislauf (2) angeordnet ist, wobei der Heizkreislauf (1) über eine Druckausgleichsleitung (5) direkt mit dem Kühlkreislauf (2) verbunden ist.

3. Vorrichtung nach Anspruch 2, **dadurch gekennzeichnet, dass** der Kühlkreislauf (2) offen ausgebildet ist, wobei in der Rücklaufleitung (22) in Fließrichtung hinter der Druckausgleichsleitung (5) ein Drosselventil oder ein Überströmventil (24) angeordnet ist.

4. Vorrichtung nach Anspruch 1, **dadurch gekennzeichnet, dass** ein zusätzlicher Speisekreislauf (8) angeordnet ist, der mit einer Fluidquelle verbunden ist und in dem die Druckpumpe (82) angeordnet ist, wobei der Speisekreislauf (8) über eine Druckausgleichsleitung (9) direkt mit dem Kühlkreislauf verbunden ist.

5. Vorrichtung nach Anspruch 4, **dadurch gekennzeichnet, dass** die Mittel zur kontinuierlichen Druckregelung des Heizkreislaufs (1) eine Druckausgleichsleitung (5, 9) umfassen, über die der Speisekreislauf (8) oder der Kühlkreislauf (2) direkt mit dem Heizkreislauf (1) verbunden ist.

6. Vorrichtung nach Anspruch 4 oder 5, **dadurch gekennzeichnet, dass** in dem Kühlkreislauf (2) ein Wärmetauscher (27) angeordnet ist, durch den der Speisekreislauf (8) geführt ist.

7. Vorrichtung nach einem der Ansprüche 4 bis 6, **dadurch gekennzeichnet, dass** der Kühlkreislauf (2) als geschlossener Kreislauf ausgebildet ist.

8. Vorrichtung nach Anspruch 7, **dadurch gekennzeichnet, dass** in dem Kühlkreislauf (2) in Fließrichtung vor der Druckausgleichsleitung (9) ein Entlüftungsventil (29) angeordnet ist.

9. Vorrichtung nach einem der vorgenannten Ansprüche, **dadurch gekennzeichnet, dass** der Heizkreislauf (1) als geschlossener Kreislauf ausgebildet ist.

10. Vorrichtung nach einem der vorgenannten Ansprüche, **dadurch gekennzeichnet, dass** in dem Heizkreislauf (1) in Fließrichtung vor der Druckausgleichsleitung (5) ein Entlüftungsventil (17) angeordnet ist.

11. Vorrichtung nach einem der vorgenannten Ansprüche, **dadurch gekennzeichnet, dass** der Heizkreislauf (1) mit einem Pufferspeicher verbunden ist, der vorzugsweise als Schlauchpaket (6) ausgebildet ist, das mit dem Heizkreislauf (1) einerseits und dem Kühlkreislauf (2) andererseits verbunden ist.

12. Vorrichtung nach einem der vorgenannten Ansprüche, **dadurch gekennzeichnet, dass** der Kühlkreislauf (2) und/oder der Heizkreislauf (1) eine Ventilanordnung (16, 26) aufweist, über die eine Abkopplung des jeweiligen Kreislaufs (1, 2) von dem Spritzgießwerkzeug (3) unter Verbindung von Vorlauf (11, 21) und Rücklauf (12, 22) ermöglicht ist.

13. Verfahren zur variothermen Temperierung eines Spritzgießwerkzeugs (3), das mit einem Heizkreislauf (1) und einem Kühlkreislauf (2) verbunden ist, wobei eine Druckpumpe (23, 81) angeordnet ist zur Erzielung eines gewünschten Betriebsdrucks in dem Kühlkreislauf (2) und wobei eine Ventilanordnung (16, 26) zur wahlweisen Einkopplung des Spritzgießwerkzeuges (3) in den Kühlkreislauf (2) oder den Heizkreislauf (1) angeordnet ist, **dadurch gekennzeichnet, dass** der Heizkreislauf (1) zu dessen Druckregelung direkt mit dem Kühlkreislauf (2) oder einem den Druck des Kühlkreislaufs (2) erzeugenden Speisekreislauf (8) verbunden wird.

14. Verfahren nach Anspruch 13, **dadurch gekennzeichnet, dass** ein zusätzlicher Speisekreislauf (8) angeordnet wird, in dem die Druckpumpe (82) angeordnet ist, wobei der Kühlkreislauf (2) sowie auch der Heizkreislauf (1) zu deren Druckregelung jeweils direkt mit dem Speisekreislauf (8) verbunden werden.

15. Verfahren nach Anspruch 13 oder 14, **dadurch gekennzeichnet, dass** ein Schlauchpaket (6) mit dem Heizkreislauf (1) einerseits und dem Kühlkreislauf (2) andererseits verbunden wird, wobei bei Einkopplung des Spritzgießwerkzeugs (3) in den Kühlkreislauf (2) zunächst der Rücklauf des Heizkreislaufs (1) geöffnet wird und nach gewünschter Füllung des Schlauchpakets (6) der Rücklauf des Heizkreislaufs (1) geschlossen wird, wobei das Rücklaufventil (16) des Heizkreislaufs (1) bevorzugt zeitgesteuert betätigt wird.

## Claims

1. Device for variothermal tempering of an injection moulding tool (3), comprising a heating circuit (1), in which a heating module (14) is arranged and a cooling circuit (2), which is connected to a fluid source, wherein the heating circuit (1) and the cooling circuit (2) are guided through the injection moulding tool (3) and wherein means for continuous pressure control of the heating circuit (1) are arranged, **characterised in that** the means for continuous pressure control of the heating circuit (1) comprise a pressure pump (23, 81) for generating the required operating pressure, which is directly connected to the heating circuit (1) and the cooling circuit (2) via pressure compensation lines (5, 9).

2. Device according to claim 1, **characterised in that** the pressure pump (23) for generating the required operating pressure is arranged in the cooling circuit (2), wherein the heating circuit (1) is directly connected to the cooling circuit (2) via a pressure compensation line (5).

3. Device according to claim 2, **characterised in that** the cooling circuit (2) is designed to be open, wherein a throttle valve or an overflow valve (24) is arranged in the return line (22) downstream of the pressure compensation line (5) in the direction of flow.

4. Device according to claim 1, **characterised in that** an additional feed circuit (8) is arranged, which is connected to a fluid source and in which the pressure pump (82) is arranged, wherein the feed circuit (8) is directly connected to the cooling circuit via a pressure compensation line (9).

5. Device according to claim 4, **characterised in that** the means for continuous pressure control of the heating circuit (1) comprise a pressure compensation line (5, 9), via which the feed circuit (8) or the cooling circuit (2) is directly connected to the heating circuit (1).

6. Device according to claim 4 or 5, **characterised in that** a heat exchanger (27) is arranged in the cooling circuit (2), through which the feed circuit (8) is guided.

7. Device according to one of claims 4 to 6, **characterised in that** the cooling circuit (2) is designed as a closed circuit.

8. Device according to claim 7, **characterised in that** a vent valve (29) is arranged in the cooling circuit (2) upstream of the pressure compensation line (9) in the direction of flow.

9. Device according to one of the previous claims, **characterised in that** the heating circuit (1) is designed as a closed circuit.

10. Device according to one of the previous claims, **characterised in that** a vent valve (17) is arranged in the heating circuit (1) upstream of the pressure compensation line (5) in the direction of flow.

11. Device according to one of the previous claims, **characterised in that** the heating circuit (1) is connected to a buffer tank, which is preferably designed as a hose package (6), which is connected to the heating circuit (1) on the one hand and the cooling circuit (2) on the other hand.

12. Device according to one of the previous claims, **characterised in that** the cooling circuit (2) and/or the heating circuit (1) has a valve arrangement (16, 26), via which decoupling of the respective circuit (1, 2) from the injection moulding tool (3) is possible by connecting the forward flow (11, 21) and the return flow (12, 22).

13. Method for variothermal tempering of an injection moulding tool (3), which is connected to a heating circuit (1) and a cooling circuit (2), wherein a pressure pump (23, 81) is arranged for achieving a desired operating pressure in the cooling circuit (2) and wherein a valve arrangement (16, 26) for selective coupling of the injection moulding tool (3) into the cooling circuit (2) or the heating circuit (1) is arranged, **characterised in that** the heating circuit (1) for its pressure control is directly connected to the cooling circuit (2) or a feed circuit (8) generating the pressure of the cooling circuit (2).

14. Method according to claim 13, **characterised in that** an additional feed circuit (8) is arranged, in which the pressure pump (82) is arranged, wherein the cooling circuit (2) as well as the heating circuit (1) are each directly connected to the feed circuit (8) for their pressure regulation.

15. Method according to claim 13 or 14, **characterised in that** a hose package (6) is connected to the heating circuit (1) on the one hand and the cooling circuit (2) on the other hand, wherein, when the injection moulding tool (3) is coupled into the cooling circuit (2), the return flow of the heating circuit (1) is initially opened and, after the hose package (6) has been filled as desired, the return flow of the heating circuit (1) is closed, wherein the return valve (16) of the heating circuit (1) is preferably actuated in a time-controlled manner.

## Revendications

1. Dispositif de mise en température variothermique d'un outil de moulage par injection (3), comprenant un circuit de chauffage (1) dans lequel est disposé un module de chauffage (14) et un circuit de refroidissement (2) qui est relié avec la source de fluide, sachant que le circuit de chauffage (1) et le circuit de refroidissement (2) traversent l'outil de moulage par injection (3) et sachant que sont disposés des moyens permettant de réguler continuellement la pression du circuit de chauffage (1), **caractérisé en ce que** les moyens permettant de réguler continuellement la pression du circuit de chauffage (1) comprennent une pompe refoulante (23, 81) servant à générer la pression de service nécessaire, pompe qui via des conduites d'équilibrage de pression (5, 9) est directement reliée au circuit de chauffage (1) et au circuit de refroidissement (2).

2. Dispositif selon la revendication 1, **caractérisé en ce que** la pompe refoulante (23) générant la pression de service nécessaire est disposée dans le circuit de refroidissement (2), sachant que le circuit de chauffage (1) est directement relié au circuit de refroidissement (2) via une conduite d'équilibrage de pression (5).

3. Dispositif selon la revendication 2, **caractérisé en ce que** le circuit de refroidissement (2) est configuré ouvert, sachant que dans la conduite de retour (22) une vanne papillon ou une vanne de décharge (24) est disposée, observée dans le sens d'écoulement, en aval de la conduite d'équilibrage de pression (5).

4. Dispositif selon la revendication 1, **caractérisé en ce qu'**est disposé un circuit d'alimentation (8) supplémentaire relié à une source de fluide et dans lequel est disposée la pompe refoulante (82), sachant que le circuit d'alimentation (8) est relié au circuit de refroidissement via une conduite d'équilibrage de pression (9).

5. Dispositif selon la revendication 4, **caractérisé en ce que** les moyens servant à réguler continuellement la pression du circuit de chauffage (1) comprennent une conduite d'équilibrage de pression (5, 9) via laquelle le circuit d'alimentation (8) ou le circuit de refroidissement (2) est directement relié au circuit de chauffage (1).

6. Dispositif selon la revendication 4 ou 5, **caractérisé en ce que** dans le circuit de refroidissement (2) est disposé un échangeur thermique (27) traversé par le circuit d'alimentation (8).

7. Dispositif selon l'une des revendications 4 à 6, **caractérisé en ce que** le circuit de refroidissement (2) est configuré en circuit fermé.

8. Dispositif selon la revendication 7, **caractérisé en ce que** dans le circuit de refroidissement (2) une vanne de dégazage (29) est disposée, observée dans le sens d'écoulement, en amont de la conduite d'équilibrage de pression (9).

9. Dispositif selon l'une des revendications précédentes, **caractérisé en ce que** le circuit de chauffage (1) est configuré en circuit fermé.

10. Dispositif selon l'une des revendications précédentes, **caractérisé en ce que** dans le circuit de chauffage (1) une vanne de dégazage (17) est disposée, observée dans le sens d'écoulement, en amont de la conduite d'équilibrage de pression (5).

11. Dispositif selon l'une des revendications précédentes, **caractérisé en ce que** le circuit de chauffage (1) est relié à un accumulateur tampon configuré de préférence sous forme de paquet de flexibles (6) relié d'une part au circuit de chauffage (1) et d'autre part au circuit de refroidissement (2).

12. Dispositif selon l'une des revendications précédentes, **caractérisé en ce que** le circuit de refroidissement (2) et/ou le circuit de chauffage (1) présente(nt) un agencement de vannes (16, 26), agencement qui permet de déconnecter le circuit respectif (1, 2) de l'outil de moulage par injection (3) en reliant le circuit aller (11, 21) et le circuit retour (12, 22).

13. Procédé de mise en température variothermique d'un outil de moulage par injection (3) relié à un circuit de chauffage (1) et à un circuit de refroidissement (2), sachant qu'une pompe refoulante (23, 81) est disposée pour obtenir une pression de service souhaitée dans le circuit de refroidissement (2) et sachant qu'est disposé un agencement de vannes (16, 26) permettant de connecter au choix l'outil de moulage par injection (3) au circuit de refroidissement (2) ou au circuit de chauffage (1), **caractérisé en ce que** le circuit de chauffage (1), pour en réguler la pression, est directement relié au circuit de refroidissement (2) ou à un circuit d'alimentation (8) générant la pression du circuit de refroidissement (2).

14. Procédé selon la revendication 13, **caractérisé en ce qu'**est disposé un circuit d'alimentation (8) supplémentaire dans lequel est disposée la pompe refoulante (82), sachant que le circuit de refroidissement (2) et le circuit de chauffage (1) sont, pour en réguler la pression, chacun relié directement au circuit d'alimentation (8).

15. Procédé selon la revendication 13 ou 14, **caractérisé en ce qu'**un paquet de flexibles (6) est relié d'une part au circuit de chauffage (1) et d'autre part au circuit de refroidissement (2), sachant que lors de la connexion de l'outil de moulage par injection (3) au circuit de refroidissement (2), le circuit retour du circuit de chauffage (1) est ouvert dans un premier temps, et qu'ensuite, lorsque le paquet de flexibles (6) s'est rempli comme souhaité, le circuit retour du circuit de chauffage (1) est refermé, sachant que la vanne de retour (16) du circuit de chauffage (1) est actionnée préférentiellement de façon pilotée en temps.
